Europäisches Patentamt

European Patent Office

Office européen des brevets

(11) Veröffentlichungsnummer: **0 167 674**
**B1**

(12) # EUROPÄISCHE PATENTSCHRIFT

(45) Veröffentlichungstag der Patentschrift:
29.06.88

(51) Int. Cl.⁴: **G 01 F 23/22**

(21) Anmeldenummer: **84116171.4**

(22) Anmeldetag: **22.12.84**

(54) **Füllstandsanzeige.**

(30) Priorität: **09.07.84 DE 3425212**

(43) Veröffentlichungstag der Anmeldung:
**15.01.86 Patentblatt 86/3**

(45) Bekanntmachung des Hinweises auf die Patenterteilung:
**29.06.88 Patentblatt 88/26**

(84) Benannte Vertragsstaaten:
**DE FR GB IT NL SE**

(56) Entgegenhaltungen:
**EP-A-0 094 298**
**DE-A-2 849 066**
**DE-A-3 021 374**
**DE-A-3 308 180**

(73) Patentinhaber: **VDO Adolf Schindling AG,
Gräfstrasse 103, D-6000 Frankfurt/Main (DE)**

(72) Erfinder: **Kronenberg, Hartmut, Damaschke-
Strasse 125, D-6231 Schwalbach (DE)**
Erfinder: **Pentz, Bernhard v., Ludwig- Christ-
Strasse 9, D-6242 Kronberg (DE)**

(74) Vertreter: **Klein, Thomas, Dipl.- Ing. (FH), Sodener
Strasse 9 Postfach 6140, D-6231 Schwalbach a.
Ts. (DE)**

EP 0 167 674 B1

## Beschreibung

Die Erfindung bezieht sich auf eine Füllstandsanzeige mit einem Geber, dessen elektrischer Widerstand füllstandsabhängig veränderlich ist, und mit einem elektrischen Meßwerk. Solche Füllstandsanzeigen werden zum Beispiel in Kraftfahrzeugen zur Anzeige des Kraftstoffvorrates im Tank eingesetzt und sind allgemein bekannt.

In Kraftfahrzeugen besteht bei Füllstandsanzeigen das Problem, daß sich der Füllstand durch Erschütterungen während der Fahrt oder durch Beschleunigungskräfte bei Kurvenfahrt oder Geschwindigkeitsänderungen des Fahrzeugs vorübergehend sehr rasch ändern kann. Bei nicht ausreichend gedämpften Füllstandsanzeigen bewegt sich der Zeiger dann entsprechend rasch hin und her, was eine genaue Anzeige des Füllstandes ausschließt.

Man hat zwar bei Quotientenmeßwerken, die auf Stromänderungen sehr rasch reagieren, eine Öldämpfung vorgesehen. Nachteilig dabei ist es jedoch, daß das Öl bei Temperaturänderungen seine Viskosität stark verändert und deshalb unterschiedlich stark dämpft, so daß es ebenfalls zu Meßwertverfälschungen kommt.

Der Erfindung liegt die Aufgabe zugrunde, eine Füllstandsanzeige der eingangs genannten Art derart auszubilden, daß mit möglichst geringem Aufwand eine temperaturunabhängige Dämpfung der Anzeige ohne nachteilige Beeinflussung der Anzeigegenauigkeit möglich ist.

Diese Aufgabe wird erfindungsgemäß dadurch gelöst, daß das Meßwerk ein Quotientenmeßwerk ist, dessen eine Meßspule über eine Elektronik mit einer Dämpfungseinrichtung mit variablem Ein/Ausverhältnis in Abhängigkeit vom Gebersignal mit einer Stromquelle verbindbar ist.

Bei der erfindungsgemäßen Füllstandsanzeige wird die Meßspule nicht unmittelbar vom Geber gesteuert, sondern unter Zwischenschaltung der Elektronik. Durch die Änderung des Ein/Ausverhältnisses fließt im Mittel mehr oder weniger Strom durch die Meßspule, so daß es genau wie bei der vorbekannten Füllstandsanzeige zu einem entsprechenden Zeigerausschlag kommt. Abweichend von vorbekannten Meßwerken braucht das Quotientenmeßwerk jedoch nicht mit mechanischen Mitteln gedämpft zu werden. Dadurch wird die Genauigkeit der Anzeige erhöht. Durch Veränderung der elektronischen Dämpfung ist des weiteren eine Anpassung an die Gegebenheiten in dem Behälter möglich, dessen Füllstand gemessen werden soll.

Mit elektronischen Bauteilen am einfachsten ausführbar ist die erfindungsgemäße Füllstandsanzeige, wenn das Pulspausenverhältnis digital von einem Mikroprozessor gebildet wird, der z. B. noch weitere Anzeigen wie Bordrechner ansteuern kann.

Zur Erzeugung der die Meßspule steuernden Impulse kann nach einer anderen Ausführungsform vorteilhafterweise ein Komparator verwendet werden, der eingangsseitig mit dem Widerstandssignal des Gebers und einer konstanten Sägezahnfrequenz beschaltet ist.

Bei der Dämpfungseinrichtung handelt es sich nach einer bevorzugten Ausführung um ein RC-Glied mit hochohmigen nachgeschalteten Verstärker, z. B. Operationsverstärker.

In Kraftfahrzeugen ist es erwünscht, daß unmittelbar nach dem Einschalten der Zündung eine Füllstandsanzeige erfolgt. Die erfindungsgemäße elektronische Dämpfung verhindert jedoch an sich die angestrebte rasche Anzeige. Das kann jedoch vermieden werden, wenn die Dämpfung durch einen im Augenblick des Einschaltens der Füllstandsanzeige kurzfristig schließenden, elektronischen Schalter überbrückbar ist.

Die erfindungsgemäße Füllstandsanzeige kann auch eine Warnlampe enthalten, die bei Erreichen eines minimalen Füllstandes aufleuchtet. Bei einer solchen Ausführungsform ist zwischen der Dämpfungseinrichtung und dem Komparator eine Verbindung zu einem Schwellwertschalter zu erzeugen, über den die Warnlampe zur Anzeige einer Reservefüllstandsmenge geschaltet ist.

Vorzugsweise ist von dem Ausgangssignal des Komparators ein zwischen der Stromquelle und dem Quotientenmeßwerk angeordnetes Schaltelement ansteuerbar, durch das das Quotientenmeßwerk mit der Stromquelle verbindbar ist.

Eine Anpassung des Anfangs und des Endes des Anzeigebereichs des Quotientenmeßwerks ist dadurch möglich, daß zum Schaltelement ein Widerstand parallel geschaltet ist. Zum gleichen Zweck dient es, wenn zwischen dem Schaltelement und dem Quotientenmeßwerk ein Widerstand angeordnet ist.

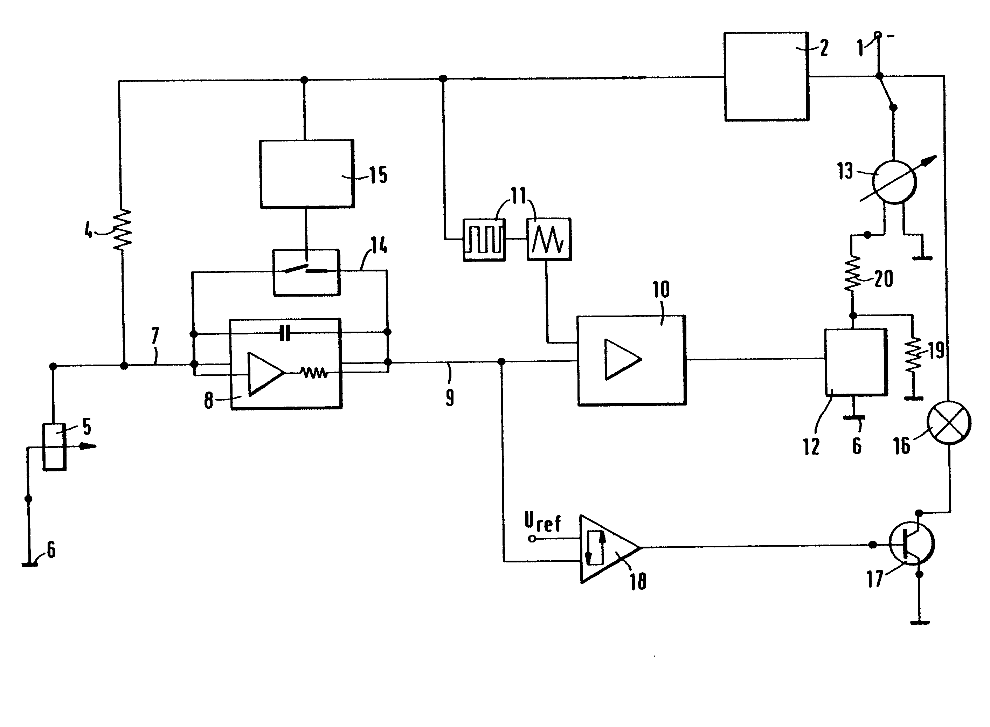

Die Erfindung läßt zahlreiche Ausführungsformen zu. Zur Verdeutlichung ihres Grundprinzips ist ein Blockschaltbild einer bevorzugten Ausführung der erfindungsgemäßen Füllstandsanzeige in der Zeichnung dargestellt und wird nachfolgend beschrieben.

Die erfindungsgemäße Füllstandsanzeige wird über eine Klemme 1 von einer nicht dargestellten Spannungsquelle mit Gleichstrom versorgt. Ein Filter 2 dient zur Stabilisation der Spannungsversorgung und zum Fernhalten von überlagerten Störsignalen. Strom fließt durch einen Vorwiderstand 4 und einen Geber 5 zur Fahrzeugmasse 6. Bei dem Geber 5 kann es sich um einen entsprechend des Füllstandes im Behälter veränderlichen Widerstand handeln.

Über eine Leitung 7 wird eine füllstandsabhängige Spannung einer elektronischen Dämpfungseinrichtung 8 zugeführt, bei der es sich um eine Integratorschaltung mit entsprechender Zeitkonstante handelt, die Spannungssprünge am aus Vorwiderstand 4 und Geber 5 gebildeten Eingangsspannungsteiler in eine langsame Spannungsänderung an ihrem Ausgang umwandelt. Dieses beruhigte Gebersignal wird über eine Leitung 9 einem Komparator 10 zugeführt, der eingangsseitig über einen Frequenzgeber 11 weiterhin eine Sägezahnspannung erhält.

Am Ausgang des Komparators 10 entstehen dann Pulse, deren Pulsweiten in Abhängigkeit von der vom Geber 5 kommenden Spannung moduliert werden. Diese Pulse werden einem Schaltelement 12 zugeführt, die beim Anliegen eines Pulses jeweils durchschaltet und dadurch ein Quotientenmeßwerk 13 pulsierend mit der Fahrzeugmasse verbindet.

Um nach dem Einschalten der Zündung sofort einen richtigen Meßwert unverzögert anzeigen zu können, besitzt die Dämpfungseinrichtung 8 eine Überbrückung 14 mit einem von der Klemme 1 gesteuerten elektronischen Schalter 15, der im Augenblick des Einschaltens der Zündung vorübergehend schließt und damit die Dämpfung 8 wirkungslos macht.

Wünschenswert ist es vor allem bei Kraftfahrzeugen, daß bei Erreichen eines minimalen Kraftstoffüllstandes eine Warnlampe 16 aufleuchtet. Diese ist ebenfalls an der Klemme 1 angeschlossen und über einen Transistor 17 mit Masse verbunden. Der Transistor schaltet durch, wenn die Spannung in der Leitung 9 unterhalb einen in einem Schwellwertschalter 16 festgelegten Wert sinkt.

**Patentansprüche**

1. Füllstandsanzeige mit einem Geber (5), dessen elektrischer Widerstand füllstandsabhängig veränderlich ist, und mit einem elektrischen Meßwerk, dadurch gekennzeichnet, daß das Meßwerk ein Quotientenmeßwerk (13) ist, dessen eine Meßspule über eine Elektronik mit einer Dämpfungseinrichtung (8) mit variablem Ein/Ausverhältnis in Abhängigkeit vom Gebersignal mit einer Stromquelle (6) verbindbar ist.

2. Füllstandsanzeige nach Anspruch 1, dadurch gekennzeichnet, daß das variable Ein/Ausverhältnis digital von einem Mikroprozessor gebildet wird.

3. Füllstandsanzeige nach Anspruch 1, dadurch gekennzeichnet, daß die Elektronik einen Komparator (10) enthält, der eingangsseitig mit dem Widerstandssignal des Gebers (5) und einer konstanten Sägezahnfrequenz beschaltet ist.

4. Füllstandsanzeige nach Anspruch 1 oder einem der folgenden, dadurch gekennzeichnet, daß die Dämpfungseinrichtung (8) ein RC-Glied mit nachgeschaltetem Verstärker ist.

5. Füllstandsanzeige nach Anspruch 1 oder einem der folgenden Ansprüche, dadurch gekennzeichnet, daß die Dämpfeinrichtung (8) durch einen im Augenblick des Einschaltens der Füllstandsanzeige kurzfristig schließenden, elektronischen Schalter (15) überbrückbar ist.

6. Füllstandsanzeige nach einem der Ansprüche 3 bis 5, dadurch gekennzeichnet, daß zwischen der Dämpfungseinrichtung (8) und dem Komparator (10) eine Verbindung zu einem Schwellwertschalter (18) besteht, über den eine Warnlampe (16) zur Anzeige einer Reservefüllstandsmenge geschaltet ist.

7. Füllstandsanzeige nach einem der Ansprüche 3 bis 6 dadurch gekennzeichnet, daß von dem Ausgangssignal des Komparators (10) ein zwischen der Stromquelle (6) und dem Quotientenmeßwerk (13) angeordnetes Schaltelement (12) ansteuerbar ist, durch das das Quotientenmeßwerk (13) mit der Stromquelle (6) verbindbar ist.

8. Füllstandsanzeige nach Anspruch 7, dadurch gekennzeichnet, daß zum Schaltelement (12) ein Widerstand (19) parallel geschaltet ist.

9. Füllstandsanzeige nach Anspruch 6, dadurch gekennzeichnet, daß zwischen dem Schaltelement (12) und dem Quotientenmeßwerk (13) ein Widerstand (20) angeordnet ist.

**Claims**

1. Level indicator having a signal emitter (5) whose electrical resistance is variable in dependence on level, and having an electrical measuring element, characterised in that the measuring element is a quotient measuring element (13) a measuring coil of which is connectable to a current source (6) via an electronics unit having a damping device (8) with variable on-off rate in dependence on the emitter signal.

2. Level indicator according to claim 1, characterised in that the variable on-off rate is formed digitally by a microprocessor.

3. Level indicator according to claim 1, characterised in that the electronics unit comprises a comparator (10) which is connected at the input side to the resistance signal of the signal emitter (5) and a constant sawtooth frequency.

4. Level indicator according to claim 1 or one of the following claims, characterised in that the damping device (8) is an RC network to whose output side an amplifier is connected.

5. Level indicator according to claim 1 or one of the following claims, characterised in that the damping device (8) is bypassable by an electronic switch (15) which closes briefly at the instant when the level indicator is switched on.

6. Level indicator according to one of claims 3 to 5, characterised in that between the damping device (8) and the comparator (10) there is provided a connection to a threshold value switch (18) by means of which a warning lamp (16) is controlled for indication a reserve level amount.

7. Level indicator according to one of claims 3 to 6, characterised in that a switching element (12) which is arranged between the current source (6) and the quotient measuring element (13) and whereby the quotient measuring element (13) is connectable to the current source (6) is actuatable by the output signal of the comparator (10)

8. Level indicator according to claim 7, characterised in that a resistor (19) is connected in parallel with the switching element (12).

9. Level indicator according to claim 8, characterised in that a resistor (20) is arranged between the switching element (12) and the quotient measuring element (13).

**Revendications**

1. Indicateur de niveau comportant un émetteur (5), dont la résistance électrique peut varier en fonction de ce niveau, et un dispositif de mesure électrique, indicateur caractérisé en ce que le dispositif de mesure est un quotient-mètre (13), dont une bobine de mesure peut être reliée, par l'intermédiaire d'un circuit électronique comportant un dispositif (8) d'amortissement, à rapport variable marche/arrêt selon le signal provenant de l'émetteur, avec une source de courant.

2. Indicateur de niveau selon la revendication 1, caractérisé en ce que le rapport variable marche/arrêt est numériquement formé par un microprocesseur.

3. Indicateur de niveau selon la revendication 1, caractérisé en ce que le circuit électronique comporte un comparateur (10), dont l'entrée est alimentée par le signal émis par la résistance de l'émetteur (5) et par une fréquence en dents de scie d'allure constante.

4. Indicateur de niveau selon la revendication 1 ou selon l'une des revendications suivantes, caractérisé en ce que le dispositif (8) d'amortissement est un élément RC comportant un amplificateur placé en aval.

5. Indicateur de niveau selon la revendication 1 ou selon l'une des revendications suivantes, caractérisé en ce que le dispositif (8) d'amortissement peut être court-circuité par un commutateur (15) électronique qui, à l'instant de l'allumage, ferme brièvement l'indicateur de niveau.

6. Indicateur de niveau selon l'une des revendications 3 à 5, caractérisé en ce qu'il comporte, entre le dispositif (8) d'amortissement et le comparateur (10), une liaison avec un commutateur (18) à valeur de seuil par l'intermédiaire duquel une lampe témoin (16) est mise en circuit pour indiquer que l'on est passé à un niveau ou état de remplissage correspondant à une quantité de réserve.

7. Indicateur de niveau selon l'une des revendications 3 à 6, caractérisé en ce que le signal de sortie du comparateur (10) peut commander un élément de circuit (12), disposé entre la source (6) de courant et le quotient-mètre (13) et qui permet de relier le quotientmètre (13) à la source (6) de courant.

8. Indicateur de niveau selon la revendication 7, caractérisé en ce qu'une résistance (19) est montée en parallèle avec l'élément (12) de circuit commutateur.

9. Indicateur de niveau selon la revendication 8, caractérisé en ce qu'une résistance (20) est montée entre l'élément de circuit (12) et le quotient-mètre (13).

0 167 674